# EUROPÄISCHE PATENTANMELDUNG

(11) **EP 1 158 559 A2**
(43) Veröffentlichungstag der Anmeldung: **28.11.2001**
(21) Anmeldenummer: 01000149.3
(22) Anmeldetag: 16.05.2001
(51) Int. Cl.: H01J 17/20, H01J 17/49

(54) **Plasmabildschirm mit Terbium(III)-aktiviertem Leuchtstoff**

(30) Priorität: 19.05.2000 DE 10024835
(71) Anmelder: Philips Corporate Intellectual Property GmbH, 52064 Aachen (DE); Koninklijke Philips Electronics N.V., 5621 BA Eindhoven (NL)
(72) Erfinder: Jüstel, Thomas Dr. Philips Corp. Int. Prop. GmbH, 52064, Aachen (DE); Spekowius, Gerhard Philips Corp. Intel. Prop. GmbH, 52064, Aachen (DE); van Heusden , Syb Philips Corp. Intel. Prop. GmbH, 52064, Aachen (DE); Oversluizen, Gerrit Dr. Philips Corp.Int.Prop.GmbH, 52064, Aachen (DE); de Zwart, Siebe Dr. Philips Corp. Intel.Prop.GmbH, 52064, Aachen (DE)
(74) Vertreter: Volmer, Georg, Dipl.-Ing.

(57) **Zusammenfassung**

Die Erfindung beschreibt einen Plasmabildschirm mit einer verbesserten Farbsättigung und einer verbesserten Farbkonstanz. Dies wird erreicht durch Einsatz Tb³⁺-aktivierter Leuchtstoffe und einer Gaszusammensetzung mit erhöhtem Xenon-Gehalt.

## Beschreibung

Die Erfindung betrifft einen Plasmabildschirm ausgerüstet mit einer Frontplatte, die eine Glasplatte, auf der eine dielektrische Schicht und eine Schutzschicht aufgebracht sind, aufweist, mit einer Trägerplatte ausgestattet mit einer Leuchtstoffschicht, die einen roten und einen blauen Leuchtstoff sowie einen grünen, Tb³⁺-aktivierten Leuchtstoff enthält, mit einer Rippenstruktur, die den Raum zwischen Frontplatte und Trägerplatte in Plasmazellen, die mit einem xenonhaltigen Gas gefüllt sind, aufteilt, und mit einem oder mehreren Elektroden-Arrays auf der Frontplatte und der Trägerplatte zur Erzeugung von stillen elektrischen Entladungen in den Plasmazellen.

Plasmabildschirme ermöglichen Farbbilder mit hoher Auflösung, großer Bildschirmdiagonale und sind von kompakter Bauweise. Ein Plasmabildschirm weist eine hermetisch abgeschlossene Glaszelle, die mit einem Gas gefüllt ist, mit gitterförmig angeordneten Elektroden auf. Durch Anlegen einer elektrischen Spannung wird eine Gasentladung hervorgerufen, die Licht im ultravioletten Bereich (145 bis 185 nm) erzeugt. Durch Leuchtstoffe kann dieses Licht in sichtbares Licht umgewandelt und durch die Frontplatte der Glaszelle zum Betrachter emittiert werden.

Für Plasmabildschirme werden Leuchtstoffe verwendet, die unter Vakuum-UV-Anregung besonders effizient sind. Häufig verwendete grün-emittierende Leuchtstoffe sind zum Beispiel Zn₂SiO₄:Mn (ZSM) oder BaAl₁₂O₁₉:Mn (BAL). Beide Materialien zeigen eine gesättigte, grüne Emissionsfarbe mit einem hohen y-Wert von y > 0.7. Nachteilig ist bei beiden Materialien ihre relativ lange Abklingzeit t_{1/10}, die für Zn₂SiO₄ mit 2.5% Mn beispielsweise bei 30 ms liegt. Dies liegt daran, dass der für die Emission des Lichtes relevante Übergang ⁴T₁→⁶A₁ spinverboten ist. Darüber hinaus sind die Abklingzeit t_{1/10} und der Farbpunkt eines Mn²⁺-aktivierten Leuchtstoffes stark abhängig von der Konzentration an Mn²⁺. Ein weiterer Nachteil ist die Empfindlichkeit von Mn²⁺ gegenüber einer Oxidation zu Mn³⁺ oder Mn⁴⁺, welche die Stabilität der Leuchtstoffe verringert.

Im Gegensatz dazu sind Tb³⁺-aktivierte Leuchtstoffe temperatur- und photostabil, da sich Tb³⁺ nur schwer zu Tb⁴⁺ oxidieren lässt. Ein weiterer Vorteil dieser Leuchtstoffe gegenüber Mn²⁺-aktivierten Leuchtstoffen ist ihre kürzere Abklingzeit t_{1/10}, die je nach Wirtsgitter zwischen 2 und 10 ms liegt.

In der US 6,004,481 wird deshalb ein grün-emittierender, Tb³⁺-aktivierter Leuchtstoff für Anwendungen in Plasmabildschirmen beschrieben, der die Zusammensetzung (Y_{1-x-y-z}GdₓTb_{y}Ce_{z})BO₃ aufweist, wobei 0.0 < x < 0.2, 0.01 < y < 0.1 und 0.0 < z < 0.1 ist.

Ein großer Nachteil Tb³⁺-aktivierter Leuchtstoffe ist ihr gelb-grüner Farbpunkt, der einen niedrigen y-Wert von y < 0.62 besitzt.

Der Erfindung liegt die Aufgabe zugrunde, einen Plasmabildschirm mit einem Tb³⁺-aktivierten Leuchtstoff bereitzustellen, dessen grüne Bildpunkte Licht mit einem verbesserten Farbpunkt liefern.

Die Aufgabe wird gelöst, durch einen Plasmabildschirm ausgerüstet mit einer Frontplatte, die eine Glasplatte, auf der eine dielektrische Schicht und eine Schutzschicht aufgebracht sind, aufweist, mit einer Trägerplatte ausgestattet mit einer Leuchtstoffschicht, die einen roten und einen blauen Leuchtstoff sowie einen grünen Tb³⁺-aktivierten Leuchtstoff enthält, mit einer Rippenstruktur, die den Raum zwischen Frontplatte und Trägerplatte in Plasmazellen, die mit einem xenonhaltigen Gas gefüllt sind, aufteilt, und mit einem oder mehreren Elektroden-Arrays auf der Frontplatte und der Trägerplatte zur Erzeugung von stillen elektrischen Entladungen in den Plasmazellen, wobei das Gas Xenon mit einem Anteil zwischen 5 und 30 Vol.-% enthält.

Es ist ganz besonders bevorzugt, dass der Anteil an Xenon im Gas 10 Vol.-% beträgt.

Durch einen erhöhten Anteil von Xenon im Gas wird überraschenderweise der y-Wert des Farbpunkts von Tb³⁺-aktivierten Leuchtstoffen erhöht. Dadurch sind die grünen Bildpunkte eines Plasmabildschirms mit Tb³⁺-aktiviertem Leuchtstoff ausreichend grün gesättigt.
Es ist weiterhin bevorzugt, dass der grüne, Tb³⁺-aktivierte Leuchtstoff ausgewählt ist aus der Gruppe (InₓGd₁₋ₓ)BO₃:Tb (0≤x≤1), Y₂SiO₅:Tb, CeMgAl₁₁O₁₉:Tb, (Y₁₋ₓ₋ _{y}GdₓPr_{y})BO₃:Tb (0≤x≤ 1,0≤ y≤ 0.05), GdMgB₅O₁₀:Ce,Tb und LaPO₄:Ce,Tb.

Diese Tb³⁺-aktivierten Leuchtstoffe sind besonders effiziente, grün-emittierende Leuchtstoffe bei Anregung mit VUV-Licht.

Es kann ganz besonders vorteilhaft sein, dass der grüne, Tb³⁺-aktivierte Leuchtstoff (Y_{1-x-y}GdₓPr_{y})BO₃:Tb (0≤x≤1, 0≤y≤0.05) enthält.

Dieser Leuchtstoff weist eine kurze Abklingzeit von t_{1/10} = 8 ms und einen hohen y-Wert von y > 0.61 in seinem Farbpunkt auf.

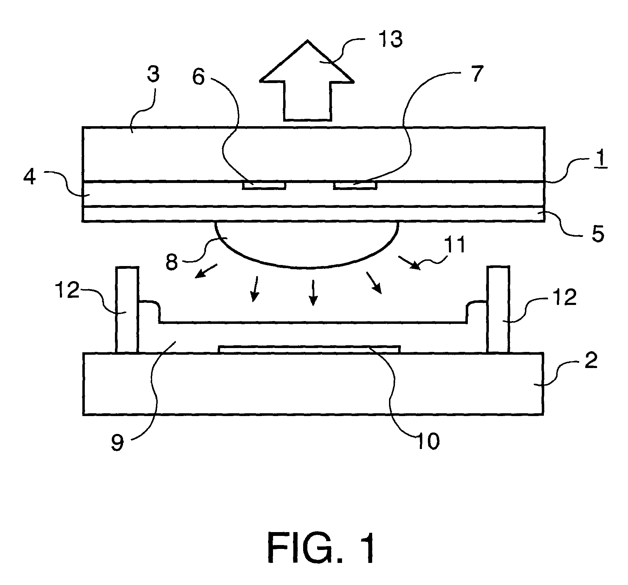

Im folgenden soll anhand von einer Figur und einem Ausführungsbeispiel die Erfindung näher erläutert werden. Dabei zeigt
- Fig. 1: den Aufbau und das Funktionsprinzip einer einzelnen Plasmazelle in einem AC-Plasmabildschirm.

Gemäß Fig. 1 weist eine Plasmazelle eines AC-Plasmabildschirms mit einer koplanaren Anordnung der Elektroden eine Frontplatte 1 und eine Trägerplatte 2 auf. Die Frontplatte 1 enthält eine Glasplatte 3, auf der eine dielektrische Schicht 4 und darauf eine Schutzschicht 5 aufgebracht sind. Die Schutzschicht 5 ist bevorzugt aus MgO und die dielektrische Schicht 4 ist beispielsweise aus PbO-haltigem Glas. Auf die Glasplatte 3 sind parallele, streifenförmige Entladungselektroden 6,7 aufgebracht, die von der dielektrischen Schicht 4 bedeckt sind. Die Entladungselektroden 6,7 sind zum Beispiel aus Metall oder ITO. Die Trägerplatte 2 ist aus Glas und auf der Trägerplarte 2 sind parallele, streifenförmige, senkrecht zu den Entladungselektroden 6,7 verlaufende Adresselektroden 10 aus beispielsweise Ag aufgebracht. Diese sind von einer Leuchtstoffschicht 9, die Licht in einer der drei Grundfarben rot, grün oder blau emittiert, bedeckt. Die einzelnen Plasmazellen sind durch eine Rippenstruktur 12 mit Trennrippen aus vorzugsweise dielektrischem Material getrennt.
In der Plasmazelle, als auch zwischen den Entladungselektroden 6,7, von denen jeweils eine im Wechsel als Kathode bzw. Anode wirkt, befindet sich ein Gas, vorzugsweise ein Edelgasgemisch, aus beispielsweise He, Ne oder Kr, das Xenon in einer Menge von 5 bis 30 Vol.-% enthält. Nach Zündung der Oberflächenentladung, wodurch Ladungen auf einem zwischen den Entladungselektroden 6,7 im Plasmabereich 8 liegenden Entladungsweg fließen können, bildet sich im Plasmabereich 8 ein Plasma, durch das je nach der Zusammensetzung des Gases Strahlung 11 im UV-Bereich, insbesondere im VUV-Bereich, erzeugt wird Diese Strahlung 11 regt die Leuchtstoffschicht 9 zum Leuchten an, die sichtbares Licht 13 in einer der drei Grundfarben emittiert, das durch die Frontplatte 1 nach außen tritt und somit einen leuchtenden Bildpunkt auf dem Bildschirm darstellt.

Die dielektrische Schicht 4 über den transparenten Entladungselektroden 6,7 dient unter anderem bei AC-Plasmabildschirmen dazu, eine direkte Entladung zwischen den aus leitfähigem Material bestehenden Entladungselektroden 6,7 und damit die Ausbildung eines Lichtbogens bei Zündung der Entladung zu unterbinden.

Als grün-emittierender Leuchtstoff in der Leuchtstoffschicht wird ein Tb³⁺-aktivierter Leuchtstoff wie beispielsweise (InₓGd₁₋ₓ)BO₃:Tb (0 ≤x≤1), Y₂SiO₅:Tb, CeMgAl₁₁O₁₉:Tb, (Y_{1-x-y}GdₓPr_{y})BO₃:Tb (0≤x≤1, 0≤y≤0.05), GdMgB₅O₁₀:Ce,Tb oder LaPO₄:Ce,Tb verwendet. Bevorzugt wird (Y_{1-x-y}GdₓPr_{y})BO₃:Tb (0 ≤ x ≤ 1, 0 ≤ y ≤ 0.05) eingesetzt.

Das Gas enthält vorzugsweise ein binäres oder ternäres Edelgasgemisch aus He/Xe, Ne/Xe oder He/Ne/Xe mit einem Anteil an Xenon im Gas, der zwischen 5 und 30 Vol.-% liegt.

Ganz besonders bevorzugt beträgt der Anteil an Xenon im Gas 10 Vol.-%. Durch die Erhöhung des Xenon-Anteiles im Gas auf über 5 Vol.-% wird der y-Wert der Tb³⁺-aktivierten Leuchtstoffe erhöht. Dadurch erscheinen die grünen Bildpunkte ausreichend grün.

Ein weiterer Vorteil der Plasmabildschirme mit einem Xenon-Gehalt größer 5 Vol.-% ist, dass mit Erhöhung des Xenon-Gehalts die Intensität der Emissionsbanden von Neon im Bereich von 580 und 750 nm verringert wird. Dadurch wird auch die Farbsättigung der blauen Leuchtstoffe bzw. Bildpunkte erhöht.
Durch Verwendung eines Tb³⁺-aktivierten Leuchtstoffes in Kombination mit einem Gas, welches einen erhöhten Anteil an Xenon enthält, wird nicht nur der y-Wert des Farbpunktes der grünen Bildpunkte erhöht, sondern auch deren Luminanz erhöht.

Wie in Tabelle 1 gezeigt, erhöht sich die Luminanz eines monochromen Plasmabildschirms mit (Y,Gd)BO₃:Tb als Leuchtstoff um fast 30 % im Vergleich zu einem monochromen Plasmabildschirm mit Zn₂SiO₄:Mn. Bei einem Xenon-Gehalt von 10 Vol.-% im Gas ist der Farbpunkt von (Y,Gd)BO₃:Tb noch im Bereich von ZnS:Cu (x = 0.31, y = 0.61), welches in Farbkathodenstrahlröhren als grün-emittierender Leuchtstoff eingesetzt wird.

**Tabelle 1:**

| CIE Farbpunkte und Luminanz monochromer Plasmabildschirme mit Zn₂SiO₄:Tb oder (Y,Gd)BO₃:Tb bei unterschiedlichen Gaszusammensetzungen | | | |
|---|---|---|---|
| Gaszusammensetzung [Vol.-%] | Leuchtstoff | CIE Farbpunkt [x, y] | Luminanz [cd/m²] |
| 3.5 Xe, 96.5 Ne | Zn₂SiO₄:Mn | 0.25, 0.67 | 1390 |
| 3.5 Xe, 96.5 Ne | (Y,Gd)BO₃:Tb | 0.36, 0.53 | 1820 |
| 10 Xe, 90 Ne | Zn₂SiO₄:Mn | 0.15, 0.74 | 2700 |
| 10 Xe, 90 Ne | (Y,Gd)BO₃:Tb | 0.31, 0.60 | 3700 |

Im folgenden wind eine Ausführungsform der Erfindung erläutert, die eine beispielhafte Realisierungsmöglichkeit darstellt.

### Ausführungsbeispiel

Zunächst wurde eine Suspension des Leuchtstoffes (Y,Gd)BO₃:Tb hergestellt, der Additive wie ein organisches Bindemittel und ein Dispersionsmittel zugesetzt wurden. Mittels Siebdruck wurde die Suspension auf einer Trägerplatte 2 strukturiert aufgebracht und getrocknet. Dieser Prozessschritt wird nacheinander für die anderen beiden Leuchtstofftypen der Emissionsfarben Rot und Blau durchgeführt. Die Trägerplatte 2 war aus Glas und war ausgerüstet mit einer Rippenstruktur 12 und Adresselektroden 10 aus Ag. Durch thermische Behandlung der Trägerplatte 2 bei 400 bis 600 °C in sauerstoffhaltiger Atmosphäre wurden alle in den Leuchtstoffschichten 9 verbliebenen organischen Additive entfernt.

Zusammen mit einer Frontplatte 1, welche eine Glasplatte 3, eine dielektrische Schicht 4 aus PbO-haltigem Glas, eine Schutzschicht 5 aus MgO und Entladungselektroden 6,7 aus ITO aufwies, und einem Gasgemisch, welches eine Zusammensetzung von 10 Vol.-% Xe und 90 Vol.-% Ne aufwies, wurde die Trägerplatte 2 zum Bau eines AC-Plasmabildschirms mit verbesserter Farbsättigung und verbesserter Farbkonstanz verwendet.

## Patentansprüche

1. Plasmabildschirm ausgerüstet mit einer Frontplatte (1), die eine Glasplatte (3), auf der eine dielektrische Schicht (4) und eine Schutzschicht (5) aufgebracht sind, aufweist, mit einer Trägerplatte (2) ausgestattet mit einer Leuchtstoffschicht (9), die einen roten und einen blauen Leuchtstoff sowie einen grünen, Tb³⁺-aktivierten Leuchtstoff enthält, mit einer Rippenstruktur (12), die den Raum zwischen Frontplatte (1) und Trägerplatte (2) in Plasmazellen, die mit einem xenonhaltigen Gas gefüllt sind, aufteilt, und mit einem oder mehreren Elektroden-Arrays (6,7,10) auf der Frontplatte (1) und der Trägerplatte (2) zur Erzeugung von stillen elektrischen Entladungen in den Plasmazellen,
**dadurch gekennzeichnet,**
**dass** das Gas Xenon mit einem Anteil zwischen 5 und 30 Vol.-% enthält.

2. Plasmabildschirm nach Anspruch 1,
**dadurch gekennzeichnet,**
**dass** der Anteil an Xenon im Gas 10 Vol.-% beträgt.

3. Plasmabildschirm nach Anspruch 1,
**dadurch gekennzeichnet,**
**dass** der grüne, Tb³⁺-aktivierte Leuchtstoff ausgewählt ist aus der Gruppe (InₓGd₁₋ₓ)BO₃:Tb (0 ≤ x ≤ 1), Y₂SiO₅:Tb, CeMgAl₁₁O₁₉:Tb, (Y_{1-x-y}GdₓPr_{y})BO₃:Tb (0 ≤ x ≤ 1, 0 ≤ y ≤ 0.05), GdMgB₅O₁₀:Ce,Tb und LaPO₄:Ce,Tb.

4. Plasmabildschirm nach Anspruch 3,
**dadurch gekennzeichnet,**
**dass** der grüne, Tb³⁺-aktivierte Leuchtstoff (Y_{1-x-y}GdₓPr_{y})BO₃:Tb (0 ≤ x ≤ 1, 0 ≤ y ≤ 0.05) enthält.
